# EUROPEAN PATENT APPLICATION

(11) **EP 4 597 606 A1**
(43) Date of publication of application: **06.08.2025**
(21) Application number: 23871340.8
(22) Date of filing: 28.06.2023
(51) Int. Cl.: H01M 4/131, C01G 53/00, H01M 4/505, H01M 4/525, H01M 4/62

(54) **POSITIVE ELECTRODE FOR NON-AQUEOUS ELECTROLYTE SECONDARY BATTERY, AND NON-AQUEOUS ELECTROLYTE SECONDARY BATTERY**

(30) Priority: 29.09.2022 JP 2022156486
(71) Applicant: Panasonic Intellectual Property Management Co., Ltd., Kadoma-shi, Osaka 571-0057 (JP)
(72) Inventor: FUJITANI Naoya, Kadoma-shi, Osaka 571-0057 (JP); AOKI Yoshinori, Kadoma-shi, Osaka 571-0057 (JP); UKA Youichirou, Kadoma-shi, Osaka 571-0057 (JP); INOUE Katsuya, Kadoma-shi, Osaka 571-0057 (JP); OGASAWARA Takeshi, Kadoma-shi, Osaka 571-0057 (JP)
(74) Representative: Novagraaf International SA
(86) International application number: PCT/JP2023/023909
(87) International publication number: WO 2024/070095

(57) **Abstract**

A positive electrode (11) in a non-aqueous electrolyte secondary battery (10) according to an embodiment of the present invention contains, as a positive-electrode active material, a lithium transition metal composite oxide that has a layered structure and contains at least 75 mol% of Ni with respect to the total molar quantity of metal elements excluding Li. The lithium transition metal composite oxide is made of secondary particles formed by aggregation of primary particles. At least one selected from the group consisting of Ca and Sr, and at least one selected from the group consisting of W, Mo, Ti, Si, Nb, and Zr, are present at the interface between primary particles inside the secondary particles. An electroconductive auxiliary agent within a positive-electrode compound layer (31) includes at least one selected from the group consisting of particulate carbon materials having an average grain diameter of 20 nm or less and fibrous carbon materials having an average fiber diameter of 20 nm or less, the carbon materials containing carbon.

## Description

### TECHNICAL FIELD

The present disclosure relates to a positive electrode for a non-aqueous electrolyte secondary battery and a non-aqueous electrolyte secondary battery using this positive electrode.

### BACKGROUND ART

Secondary batteries such as lithium-ion batteries have been widely used in recent years for usage requiring high capacity, high durability, quick charge-discharge performance, and the like, such as on-board use and power storage use. A positive electrode active material, which is a main constituent of the secondary battery, significantly affects these performance, and therefore many investigations have been made on the positive electrode active material. For example, Patent Literature 1 discloses a lithium-transition metal composite oxide having an α-NaFeO₂ structure and including one or two or more selected from the group consisting of Mn, Ni, and Co as a transition metal element, wherein an alkali earth metal and W are present on particle surfaces, as an active material for a non-aqueous electrolyte secondary battery.

### CITATION LIST

### PATENT LITERATURE

PATENT LITERATURE 1: Japanese Unexamined Patent Application Publication No. 2018-129221

### SUMMARY

In the secondary battery such as the lithium-ion battery, it is an important challenge to lower internal resistance to, for example, improve output characteristics and increase high-speed charge-discharge performance. The conventional positive electrode active materials including Patent Literature 1 still have large room for improvement of reduction in internal resistance of the battery.

A positive electrode active material for a secondary battery according to the present disclosure is a positive electrode for a non-aqueous electrolyte secondary battery, the positive electrode comprising: a positive electrode core; and a positive electrode mixture layer formed on the positive electrode core, wherein the positive electrode mixture layer includes a positive electrode active material, a conductive auxiliary, and a binder, and the positive electrode active material includes a lithium-transition metal composite oxide having a layered structure and containing greater than or equal to 75 mol% of Ni relative to the total molar amount of metal elements excluding Li. The lithium-transition metal composite oxide is of secondary particles each formed by aggregation of primary particles, and on an interface between the primary particles inside the secondary particles, at least one selected from the group consisting of Ca and Sr and at least one selected from the group consisting of W, Mo, Ti, Si, Nb, and Zr are present. The conductive auxiliary contains carbon, and includes at least one selected from the group consisting of a particulate carbon material having an average particle diameter of less than or equal to 20 nm and a fibrous carbon material having an average fiber diameter of less than or equal to 20 nm.

A non-aqueous electrolyte secondary battery according to the present disclosure comprises: the above positive electrode; a negative electrode; and a non-aqueous electrolyte.

According to the positive electrode active material of the present disclosure, the internal resistance of the non-aqueous electrolyte secondary battery may be lowered.

### BRIEF DESCRIPTION OF DRAWING

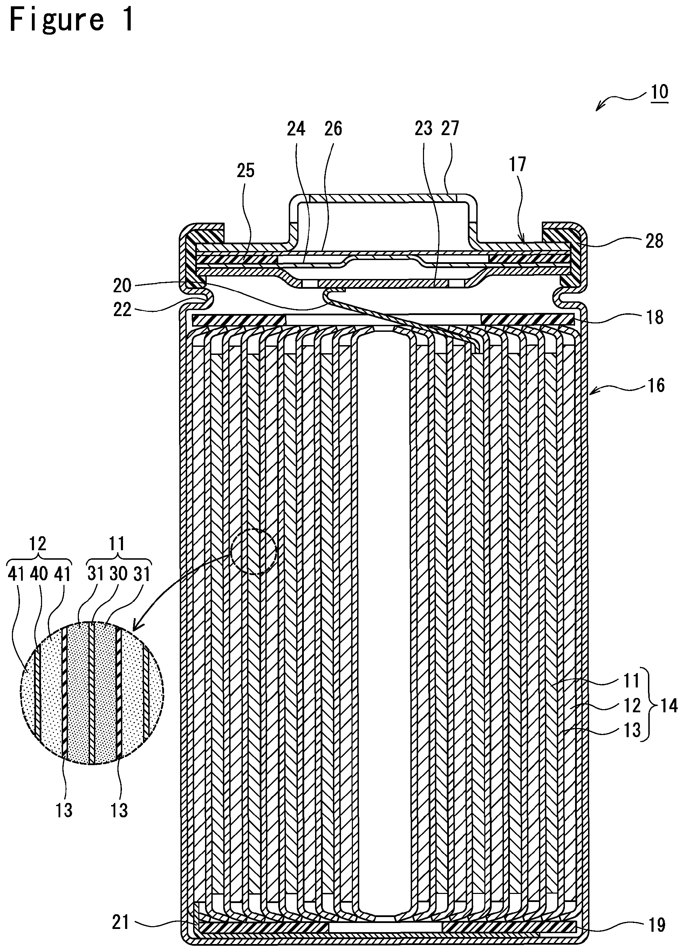

FIG. 1 is a view schematically illustrating an axial cross section of a non-aqueous electrolyte secondary battery (a cylindrical battery) of an example of an embodiment.

### DESCRIPTION OF EMBODIMENTS

As the positive electrode active material for the non-aqueous electrolyte secondary battery, a lithium-transition metal composite oxide having a high Ni content rate has attracted attention. Although the lithium-transition metal composite oxide having a high Ni content rate contributes to increase in capacity of the battery, use of this for the positive electrode active material causes a large amount of Ni⁴⁺, which has high reactivity, to be present on a particle surface layer specifically in a high state of charge (SOC), and it is known that side reactions with an electrolyte easily occur. As a result, a decomposed product is deposited and the transition metal is eluted on the positive electrode, which tends to deteriorate durability.

As a result of investigation by the present inventors, the side reactions with the electrolyte were effectively inhibited to successfully lower the reaction resistance derived from the positive electrode by introducing specific metal elements on an interface between primary particles constituting a positive electrode active material. Meanwhile, a compound including these elements has low electron conductivity, and a problem that a common conductive auxiliary such as carbon black, which is widely used, is insufficient for forming a conductive path has been found. Accordingly, the present inventors have made intensive investigation to solve this problem, and consequently found that a direct-current resistance component of the battery may be lowered to further improve the resistance of an entirety of the battery by combining a conductive auxiliary having a special fine structure.

Hereinafter, an example of embodiments of the positive electrode for a non-aqueous electrolyte secondary battery and the non-aqueous electrolyte secondary battery using this positive electrode according to the present disclosure will be described in detail with reference to the drawing. The scope of the present disclosure includes configurations composed of selective combinations of constitutional elements of a plurality of embodiments and modified examples described below.

In embodiments described below, a cylindrical battery 10 in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include a rectangular battery comprising a rectangular exterior housing can, a coin battery comprising a coin-shaped exterior housing can, and a pouch battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

FIG. 1 is a sectional view of a cylindrical battery 10 of an example of an embodiment. As illustrated in FIG. 1, the cylindrical battery 10 comprises the wound electrode assembly 14, an electrolyte, and the exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the can bottom side of the exterior housing can 16 will be described as the lower side.

The non-aqueous electrolyte is not limited to the liquid electrolyte (electrolyte liquid) and may be a solid electrolyte, but the non-aqueous electrolyte liquid is used in the present embodiment. The non-aqueous electrolyte liquid includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13 specifically the positive electrode active material to constitute the positive electrode 11 and the conductive auxiliary, will be described in detail.

### [Positive Electrode]

The positive electrode 11 has a positive electrode core 30 and a positive electrode mixture layer 31 provided on the positive electrode core 30. For the positive electrode core 30, a foil of a metal stable within a potential range of the positive electrode 11, such as aluminum, a film in which such a metal is disposed on a surface thereof, and the like may be used. The positive electrode mixture layer 31 includes a positive electrode active material, a binder, and a conductive auxiliary and is preferably provided on both surfaces of the positive electrode core 30 except for a portion where the positive electrode lead 20 is to be connected. The positive electrode 11 may be produced by, for example, applying a positive electrode mixture slurry including the positive electrode active material, the binder, the conductive auxiliary, and the like on surfaces of the positive electrode core 30, and drying and subsequently compressing the coating film to form the positive electrode mixture layer 31 on both the surfaces of the positive electrode core 30.

The positive electrode 11 includes, as the positive electrode active material, a lithium-transition metal composite oxide having a layered structure and containing greater than or equal to 75 mol% of Ni relative to the total molar amount of metal elements excluding Li. Although a detail will be described later, this lithium-transition metal composite oxide is of secondary particles each formed by aggregation of primary particles. On an interface between the primary particles inside the secondary particles, at least one selected from the group consisting of Ca and Sr and at least one selected from the group consisting of W, Mo, Ti, Si, Nb, and Zr are present.

The positive electrode active material contains the lithium-transition metal composite oxide (hereinafter, referred to as "the composite oxide (Z)") as a main component, and may be constituted with substantially only the composite oxide (Z). The positive electrode active material may include a composite oxide other than the composite oxide (Z) or other compounds within a range not impairing the object of the present disclosure. A content of the composite oxide (Z) is preferably greater than or equal to 50 mass%, and may be greater than or equal to 70 mass%, greater than or equal to 80 mass%, or substantially 100 mass% based on a total mass of the positive electrode active material.

The composite oxide (Z) has, for example, a layered rock-salt structure. Examples of the layered rock-salt structure include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure.

The composite oxide (Z) is of the secondary particles each formed by aggregation of the primary particles. A volume-based median diameter (D50) of the composite oxide (Z) is, for example, greater than or equal to 3 µm and less than or equal to 30 µm, and preferably greater than or equal to 5 µm and less than or equal to 25 µm. Since the composite oxide (Z) is of the secondary particles each formed by aggregation of the primary particles, the D50 of the composite oxide means D50 of the secondary particles. The D50 means a particle diameter at which a cumulative frequency is 50% from a smaller particle diameter side in volume-based particle size distribution. The particle size distribution of the composite oxide (Z) may be measured by using a laser diffraction-type particle size distribution measuring device (for example, MT3000II, manufactured by MicrotracBEL Corp.) with water as a dispersion medium. The particle size distribution of the positive electrode active material may be measured by using an image-type particle size distribution measuring device (for example, CAMSIZER X2, manufactured by MicrotracBEL Corp.) with water as a dispersion medium.

An average particle diameter of the primary particles constituting the composite oxide (Z) is, for example, greater than or equal to 0.02 µm and less than or equal to 1 µm, and preferably greater than or equal to 0.05 µm and less than or equal to 0.8 µm. The average particle diameter of the primary particles is calculated by measuring diameters of 100 circumscribed circles in the primary particles extracted by analyzing a scanning electron microscope (SEM) image of a cross section of the secondary particles photographed with the SEM, and averaging the measured values. The cross section of the secondary particles may be produced by a cross polisher (CP) method.

The composite oxide (Z) is, for example, a composite oxide represented by a general formula LiₓNiₐCo_{b}Mn_{c}AlₐM1ₑM2_{f}O_{2-y} (in the formula, 0.95 < x < 1.05, 0.75 ≤ a ≤ 0.95, 0 ≤ b ≤ 0.15, 0 ≤ c ≤ 0.25, 0 ≤ d ≤0.03, 0 < e ≤ 0.01, 0 < f ≤ 0.03, 0 ≤ y < 0.05, a+b+c+d+e+f = 1, M1 is at least one element selected from the group consisting of Ca and Sr, and M2 is at least one element selected from the group consisting of W, Mo, Ti, Si, Nb, and Zr). Content rates of the elements in the composite oxide (Z) may be measured with an inductively coupled plasma atomic emission spectrometer (ICP-AES), an electron probe micro analyzer (EPMA), or an energy dispersive X-ray analyzer (EDX).

The composite oxide (Z) preferably contains an amount of greater than or equal to 75 mol% of Ni relative to the total number of moles of metal elements excluding Li. Setting the content rate of Ni to be greater than or equal to 75 mol% yields the battery with high capacity, and the effect by adding the metal elements M1 and M2 becomes more remarkable. That is, a case of using the composite oxide (Z) with a high Ni content rate as the positive electrode active material causes a large amount of Ni⁴⁺, which has high reactivity, to be present on the particle surface layer, but it is considered that the effect by Ni⁴⁺ may be sufficiently reduced by the effect of the metal elements M1 and M2. The content rate of Ni may be greater than or equal to 80 mol%, or may be greater than or equal to 85 mol% relative to the total number of moles of the metal elements excluding Li. An upper limit of the content rate of Ni is, for example, 95 mol%.

The composite oxide (Z) preferably further contains at least one selected from the group consisting of Mn and Co. A preferable example of the composite oxide (Z) includes a lithium-nickel composite oxide containing Mn, a lithium-nickel composite oxide containing Mn and Co, or a lithium-nickel composite oxide containing Co and Al. When the composite oxide (Z) contains Mn, a content rate of Mn is preferably greater than or equal to 1 mol% and less than or equal to 25 mol%, and more preferably greater than or equal to 5 mol% and less than or equal to 20 mol% relative to the total number of moles of the metal elements excluding Li. In this case, both of high capacity and high durability of the battery are easily achieved.

When the composite oxide contains Co, a content rate of Co is preferably greater than or equal to 1 mol% and less than or equal to 15 mol%, and more preferably greater than or equal to 2 mol% and less than or equal to 7 mol% relative to the total number of moles of the metal elements excluding Li. In this case, both of high capacity and high durability are easily achieved while reducing the material cost. When the composite oxide (Z) contains Al, a content rate of Al is, for example, greater than or equal to 0.1 mol% and less than or equal to 5 mol% relative to the total number of moles of the metal elements excluding Li.

The composite oxide (Z) further contains the metal element M1 and the metal element M2 as the essential components. As noted above, the metal element M1 is at least one element selected from the group consisting of Ca and Sr, and the metal element M2 is at least one element selected from the group consisting of W, Mo, Ti, Si, Nb, and Zr. It is considered that adding a small amount of M1 and M2 into the composite oxide (Z) may inhibit the side reactions and the reaction resistance derived from the positive electrode may be reduced, and the charge-discharge cycle characteristics may be effectively improved. Note that adding only one of M1 and M2 cannot yield the sufficient effect.

The metal element M1 is present on at least an interface between the primary particles inside the secondary particles of the composite oxide (Z), and for example, present at a high density on the surfaces rather than the inside of the primary particles. M1 present on the surfaces of the primary particles may be confirmed by TEM-EDX and STEM-EDX. M1 is present in an evenly dispersed state on the interface between the primary particles, for example. Note that M1 may be adhered on the surfaces of the secondary particles (the surfaces of the primary particles present on the surfaces of the secondary particles).

Although the metal element M1 is effective at an extremely small amount, a lower limit of the content rate is preferably 0.05 mol%, and more preferably 0.1 mol% relative to the total number of moles of the metal elements excluding Li in the composite oxide (Z). The content rate of M1 is preferably less than or equal to 1 mol% relative to the total number of moles of the metal elements excluding Li. Even when greater than 1 mol% of M1 is added, the effect of improving the cycle characteristics is small or the cycle characteristics are rather deteriorated. Adding greater than 1 mol% of M1 leads to defects such as, for example, rise in resistance and decrease in the charge capacity.

The content rate of the metal element M1 is preferably greater than or equal to 0.05 mol% and less than or equal to 1 mol%, and more preferably greater than or equal to 0.1 mol% and less than or equal to 0.7 mol% or greater than or equal to 0.2 mol% and less than or equal to 0.5 mol%. When Ca and Sr are added as M1, a total of content rates thereof is preferably within the above range.

Although the metal element M2 is effective at an extremely small amount, a lower limit of the content rate is preferably 0.05 mol%, and more preferably 0.1 mol% relative to the total number of moles of the metal elements excluding Li in the composite oxide (Z). The content rate of M2 may be equal to the content rate of M1 or greater than the content rate of M1, and preferably less than or equal to 3 mol% relative to the total number of moles of the metal elements excluding Li. Even when greater than 3 mol% of M2 is added, the effect of improving the cycle characteristics is small or the cycle characteristics are rather deteriorated. Adding greater than 3 mol% of M2 leads to defects such as, for example, rise in resistance and decrease in the charge capacity.

The content rate of the metal element M2 is, for example, less than the content rate of Mn and greater than the content rate of M1. An example of the preferable content rate of M2 is greater than or equal to 0.05 mol% and less than or equal to 1 mol%, and more preferably greater than or equal to 0.2 mol% and less than or equal to 0.8 mol%, or greater than or equal to 0.3 mol% and less than or equal to 0.7 mol%. When greater than or equal to two types of element are added as M2, a total of content rates thereof is preferably within the above range.

As noted above, the metal element M2 is at least one selected from the group consisting of W, Mo, Ti, Si, Nb, and Zr. Although all of these elements may be added to the composite oxide (Z), less than or equal to three types of the element are preferably added. Among these, W, Ti, Nb, and Zr are preferable. When two types of M2 are added, examples of preferable combinations of M2 include Nb and Zr, Nb and Ti, Nb and W, W and Ti, and W and Zr.

Similarly to the metal element M1, the metal element M2 is present, for example, on the interface between the primary particles inside the secondary particles of the composite oxide (Z), and present at a high density on the surfaces rather than the inside of the primary particles. M2 may form a solid solution together with the other metal elements such as Ni. An amount of the solid solution of M2 may be confirmed with an inductively coupled plasma atomic emission spectrometer (ICP-AES) or an energy dispersive X-ray spectrometry (EDS).

On the interface between the primary particles inside the secondary particles of the composite oxide (Z), a compound represented by a general formula M1_{α}M2_{β}O_{γ} is adhered (in the formula, 1 ≤ α ≤ 2, 1 ≤ β ≤ 5, 4 ≤ γ ≤ 9, M1 is at least one element selected from the group consisting of Ca and Sr, and M2 is at least one element selected from the group consisting of W, Mo, Ti, Si, Nb, and Zr), for example. In this case, M1 and M2 are contained in the identical compound.

On the surfaces of the primary particles of the composite oxide (Z), at least one compound selected from the group consisting of the following first, second, and third compounds may be adhered. An example of the third compound is the compound represented by the general formula M1_{α}M2_{β}O_{γ}.

The first compound: A compound containing at least one selected from the group consisting of Ca and Sr.

The second compound: A compound containing at least one selected from the group consisting of W, Mo, Ti, Si, Nb, and Zr.

The third compound: A compound containing at least one selected from the group consisting of Ca and Sr and at least one selected from the group consisting of W, Mo, Ti, Si, Nb, and Zr.

The composite oxide (Z) may contain an element other than Li, Ni, Co, Mn, Al, M1, M2, and O. Examples of the other element include Cu, Mg, Na, K, Ba, Fe, B, and P. When the other element is contained, a content rate thereof is preferably less than or equal to 1 mol% relative to the total number of moles of the metal elements excluding Li.

The composite oxide (Z) may be synthesized by, for example, mixing and calcining an oxide containing at least Ni and preferably containing other metal elements such as Mn, Co, and Al, an M1 raw material, an M2 raw material, and a Li raw material. The calcined product is crushed, and then washed with water to obtain the composite oxide (Z). Note that the water-washing step may be omitted. An example of the Li raw material includes Li₂CO₃, LiOH, Li₂O₂, Li₂O, LiNO₃, LiNO₂, Li₂SO₄, LiOH·H₂O, LiH, and LiF. The oxide containing Ni and the like and the Li raw material are preferably mixed at a mole ratio so that a mole ratio between a total amount of the metal elements excluding Li in the oxide and Li in the Li raw material is, for example, greater than or equal to 1:0.98 and less than or equal to 1:1.12.

An example of the M1 raw material includes Ca(OH)₂, CaHPO₄, Ca(H₂PO₄)₂, Ca₃(PO₄)₂, CaO, CaCO₃, CaSO₄, Ca(NO₃)₂, CaCl₂, CaAlO₄, Sr(OH)₂, Sr(OH)₂·8H₂O, SrO, SrCO₃, SrSO₄, and Sr(NO₃)₂. An example of the M2 raw material includes Nb₂O₅, Nb₂O₅·nH₂O, WO₃, Li₂WO₄, TiO₂, Ti(OH)₄, ZrO₂, Zr(OH)₄, MoO₃, Li₂MoO₄, SiO, and SiO₂.

The calcining step of the mixture is, for example, a multi-stage calcining step including at least a first calcining step and a second calcining step at a higher temperature than in the first calcining step. The mixture is calcined under an oxygen atmosphere, and in this case, an oxygen concentration is set to be greater than or equal to 85%, for example. Although slightly varying depending on composition of the mixture, an example of the preferable first calcining temperature is greater than or equal to 500°C and less than or equal to 680°C. The preferable second calcining temperature is, for example, greater than or equal to 700°C and less than or equal to 850°C. The calcining steps preferably have a difference in temperature of greater than or equal to 50°C.

The calcining step is performed by feeding the mixture into a calcining furnace. The calcining step may include a plurality of temperature-raising steps having temperature-raising rate different from each other. For example, the temperature may be raised from room temperature to the first calcining temperature at a rate of greater than or equal to 1.0°C/min and less than or equal to 5.5°C/min (a first temperature-raising step), and the temperature may be raised from the first calcining temperature to the second calcining temperature at a rate of greater than or equal to 0.1°C/min and less than or equal to 3.5°C/min, which is lower than the first temperature-raising step (a second temperature-raising step). The temperature may be held at a highest reaching temperature in the calcining step for a predetermined time (for example, greater than or equal to 1 hour and less than or equal to 10 hours).

In the subsequent water-washing step, the calcined product obtained in the calcining step is washed with water and an impurity is removed, and the calcined product washed with water is dried with heating. The calcined product is crushed, classified, or the like as necessary to regulate D50 of the positive electrode active material within the target range. The calcined product after the water washing may be dried at a temperature of less than 100°C. An example of the preferable drying temperature is greater than or equal to 150°C and less than or equal to 250°C. The drying treatment may be performed in vacuo or under the atmosphere. An example of the time for the drying treatment is greater than or equal to 1 hour and less than or equal to 5 hours.

The composite oxide (Z) is obtained by precipitating (coprecipitating) a composite hydroxide containing Ni and the optional metal elements, and subjecting the composite hydroxide to a thermal treatment. This composite hydroxide may be synthesized by, for example, while stirring a solution of metal salts including Ni and the optional metal elements (Co, Al, Mn, M2, and the like), adding a solution of an alkali such as sodium hydroxide dropwise to adjust a pH on the alkaline side (for example, greater than or equal to 8.5 and less than or equal to 12.5). A particle diameter of the composite hydroxide tends to be smaller as the pH in the synthesis is higher. The particle diameter of the composite hydroxide may also be controlled by regulating an amount of the solution of the metal salts to be added, and a larger amount of the solution tends to yield a larger particle diameter, for example. The particle diameter of the composite oxide (Z) may be regulated by, for example, controlling the particle diameter of the composite hydroxide, which is the precursor. The temperature for the thermal treatment is not particularly limited, but within a range of greater than or equal to 250°C and less than or equal to 600°C, for example.

As noted above, the positive electrode mixture layer 31 includes the binder and the conductive auxiliary. Examples of the binder may include a fluorine-containing polymer such as polytetrafluoroethylene (PTFE) and polyvinylidene fluoride (PVDF), polyacrylonitrile (PAN), a polyimide, an acrylic resin, and a polyolefin. These resins may be used in combination with carboxymethylcellulose (CMC) or a salt thereof, polyethylene oxide (PEO), and the like. A content of the binder is, for example, greater than or equal to 0.1 part by mass and less than or equal to 2 parts by mass, and preferably greater than or equal to 0.5 parts by mass and less than or equal to 1.5 parts by mass relative to 100 parts by mass of the positive electrode active material.

The conductive auxiliary contains carbon, and includes at least one selected from the group consisting of a particulate carbon material having an average particle diameter of less than or equal to 20 nm and a fibrous carbon material having an average fiber diameter of less than or equal to 20 nm. The positive electrode mixture layer 31 may include a carbon material having an average particle diameter or an average fiber diameter of greater than 20 nm as the conductive auxiliary, but the particulate carbon material having an average particle diameter of less than or equal to 20 nm or the fibrous carbon material having an average fiber diameter of less than or equal to 20 nm is a main component. Note that the main component means a component having a highest mass proportion in the conductive auxiliary.

The conductive auxiliary may be constituted with substantially only at least one selected from the group consisting of the particulate carbon material having an average particle diameter of less than or equal to 20 nm and the fibrous carbon material having an average fiber diameter of less than or equal to 20 nm. Carbon black such as acetylene black is typically constituted with: smallest particles called a domain or a particle; primary aggregate each formed by aggregation of these smallest particles; and secondary aggregate each formed by aggregation of the primary aggregates. Here, the primary aggregate is generally called a structure or an aggregate, and the secondary aggregate is generally called as an agglomerate or the like. The average particle diameter in the present disclosure refers to an average particle diameter of the smallest particles. The aspect ratio (a ratio of a long diameter to a short diameter) of carbon black such as acetylene black refers to an aspect ratio of the primary aggregate. Note that, if the average particle diameter or the average fiber diameter of the conductive auxiliary included in the positive electrode mixture layer 31 is greater than 20 nm, the sufficient effect of lowering the resistance cannot be obtained. The positive electrode mixture layer 31 may include a carbon material having an average particle diameter or an average fiber diameter of greater than 20 nm as the conductive auxiliary as noted above, but the average particle diameter or the average fiber diameter of the conductive auxiliary included in the positive electrode mixture layer 31 is necessarily less than or equal to 20 nm.

The above particulate carbon material may be Ketjenblack, furnace black, graphite, and the like, but is preferably acetylene black (AB). An example of the preferable particulate carbon material is AB having an average particle diameter of less than or equal to 20 nm. The average particle diameter of AB is determined by image analysis using a transmission electron microscope (TEM). The average particle diameter of AB is determined by randomly selecting 100 ABs, measuring long diameters of the smallest particles, and arithmetically averaging the measurement values. A lower limit of the average particle diameter of AB is not particularly limited, and an example thereof is 1 nm. The aspect ratio of AB is, for example, greater than or equal to 1.2 times and less than or equal to 2.5 times, or greater than or equal to 1.3 times and less than or equal to 2 times.

A content of the particulate carbon material (AB) is preferably less than or equal to 2 parts by mass, more preferably less than or equal to 1.5 parts by mass, and may be less than or equal to 1 part by mass relative to 100 parts by mass of the positive electrode active material. Although AB forms the good conductive path in the positive electrode mixture layer 31 at a small amount, but a lower limit of the content is preferably 0.1 part by mass, and more preferably 0.2 parts by mass. An example of the preferable content of AB is greater than or equal to 0.2 parts by mass and less than or equal to 1.5 parts by mass, or greater than or equal to 0.5 parts by mass and less than or equal to 1.2 parts by mass relative to 100 parts by mass of the positive electrode active material.

The above fibrous carbon material may be carbon nanofiber (CNF) or the like, but is preferably carbon nanotube (CNT). CNT is a conductive carbon fiber having an outer diameter of a tube, which is a fiber diameter, of less than or equal to several tens of nanometers, and has an extremely large aspect ratio (a ratio of a fiber length to a fiber diameter). The average aspect ratio of CNT is, for example, greater than or equal to 20 times, and preferably greater than or equal to 50 times. CNT having a high aspect ratio provides linear contact, not point contact, between the active material and the core material. Thus, addition at a small amount forms a good conductive path.

The average fiber diameter of CNT used for the positive electrode 11 is less than or equal to 20 nm, preferably less than or equal to 15 nm, and more preferably less than or equal to 10 nm. The fiber diameter means a length in a direction perpendicular to the fiber length direction. The average fiber diameter of less than or equal to 20 nm more effectively lowers the direct-current resistance. A lower limit of the average fiber diameter of CNT is not particularly limited, and an example thereof is 1 nm. The average fiber diameter of CNT is determined by image analysis using a TEM. The average fiber diameter of CNT is determined by randomly selecting 100 CNTs, measuring the fiber diameters, and arithmetically averaging the measurement values.

The average fiber length of CNT is, for example, greater than or equal to 0.5 µm, and may be greater than or equal to 1 µm. The fiber length means a length of linearly extended CNT. The average fiber length of greater than or equal to 0.5 µm more effectively lowers the direct-current resistance. An upper limit of the average fiber length of CNT is not particularly limited, and an example thereof is 100 µm. The average fiber length of CNT is determined by image analysis using a scanning electron microscope (SEM). The average fiber length of CNT is determined by randomly selecting 100 CNTs, measuring the lengths, and arithmetically averaging the measurement values. CNT present in the positive electrode may be present as a bundle state of a plurality of CNTs. For calculating the average fiber length, a length of single CNT present in the bundled CNTs is used.

CNT may be any one of single-wall CNT (SWCNT) and a multiwall CNT (MWCNT), and SWCNT and MWCNT may be used in combination as the conductive auxiliary. The SWCNT has a structure in which one layer of a graphite sheet forms a tubular shape, and the multiwall CNT has a structure in which a multiwall graphite sheet forms a tubular shape. An example of the multiwall CNT is a bilayer CNT having a bilayer structure.

An example of a preferable BET specific surface area of CNT is, although slightly varying depending on the type of CNT, greater than or equal to 200 m²/g, and more preferably greater than or equal to 250 m²/g. An upper limit of the BET specific surface area is not particularly limited, and an example thereof is 2000 m²/g. The BET specific surface area is measured in accordance with the BET method (nitrogen adsorption method) described in JIS R1626.

A content of the fibrous carbon material (CNT) is preferably less than or equal to 2 parts by mass, and more preferably less than or equal to 1 part by mass relative to 100 parts by mass of the positive electrode active material. Although CNT forms the good conductive path in the positive electrode mixture layer 31 at a small amount, a lower limit of the content is preferably 0.01 part by mass, and more preferably 0.05 parts by mass. An example of the preferable content of CNT is greater than or equal to 0.1 part by mass and less than or equal to 1 part by mass, or greater than or equal to 0.2 parts by mass and less than or equal to 0.7 parts by mass relative to 100 parts by mass of the positive electrode active material.

CNT is supplied in a manufacturing process of the positive electrode 11 in a state of a conductive auxiliary dispersion liquid in which CNT is dispersed in a liquid including a dispersant and an aprotic polar solvent (dispersion medium), and added to a positive electrode mixture slurry. In the dispersion liquid, the dispersant is dissolved in the polar solvent, and CNT is dispersed in the polar solvent by an action of the dispersant. A solid-content (CNT and the dispersant) concentration of the dispersion liquid is, for example, greater than or equal to 0.1 mass% and less than or equal to 20 mass%, and from the viewpoints of achievement of both dispersibility and productivity of CNT, and the like, preferably greater than or equal to 0.2 mass% and less than or equal to 15 mass%, and more preferably greater than or equal to 1 mass% and less than or equal to 10 mass%.

D50 of CNT in the dispersed state in the polar solvent is preferably less than 8 µm, and more preferably less than 3 µm. When the positive electrode 11 is produced by using the dispersion liquid containing CNT with D50 regulated to be less than 8 µm, the direct-current resistance of the battery may be effectively lowered. The particle size distribution of CNT may be measured by using a laser diffraction-type particle size distribution measuring device, similarly to the particle size distribution of the positive electrode active material. The dispersion liquid is prepared by mixing the conductive auxiliary, the dispersant, and the aprotic polar solvent. For mixing (kneading) these raw materials, a conventionally known dispersing machine or a mixing machine such as, for example, a planetary mixer, a homo-mixier, a pin mixier, a high-speed mixer, a disper, a roll mill, a ball mill, a jet mill, and a kneader may be used.

The dispersant includes a nitrile-group-containing rubber, for example. The nitrile-group-containing rubber is a copolymer of monomers including an unsaturated nitrile and a conjugated diene as raw materials, and may be a copolymer of substantially only the unsaturated nitrile and the conjugated diene. A mole ratio between the unsaturated nitrile and the conjugated diene is, for example, greater than or equal to 10:90 and less than or equal to 70:30. A weight-average molecular weight of the nitrile rubber is not particularly limited, and an example thereof is greater than or equal to 5000 and less than or equal to 5000000. At least a part of the dispersant may function as a binder of the positive electrode mixture layer 31.

The nitrile-group-containing rubber may be a hydrogenated nitrile rubber. The hydrogenated nitrile rubber includes, for example, a structural unit derived from the unsaturated nitrile, a structural unit derived from the conjugated diene, and a structural unit derived from a hydrogenated conjugated diene. An example of the preferable hydrogenated nitrile rubber is a partially hydrogenated nitrile rubber in which greater than or equal to 80 mol% of the structural unit derived from the conjugated diene is hydrogenated. An example of the unsaturated nitrile is acrylonitrile or methacrylonitrile, and preferably acrylonitrile. An example of the conjugated diene is a conjugated diene having greater than or equal to 3 and less than or equal to 6 carbon atoms, and preferably butadiene.

The nitrile-group-containing rubber is preferably contained at an amount of greater than or equal to 10 parts by mass and less than or equal to 100 parts by mass relative to 100 parts by mass of CNT. The dispersion liquid of CNT may include only the nitrile rubber as the dispersant, and another dispersant may be used in combination. A mass ratio of the nitrile rubber in the dispersant is preferably greater than or equal to 20 mass%, and more preferably greater than or equal to 30 mass%. Examples of the other dispersant used in combination with the nitrile rubber include polyvinyl alcohol, polyvinylpyrrolidone (PVP), polyalkylene oxide, polyvinyl acetal, polyvinyl ether, cellulose, chitins, chitosans, starch, and derivatives thereof. Among these, PVP or derivatives thereof (PVPs) are preferably used.

For the dispersion medium, the aprotic polar solvent is used. The aprotic polar solvent may be any solvent that can dissolve the dispersant and that disperses CNT. Since the dispersion liquid is added to the positive electrode mixture slurry, this polar solvent is preferably a solvent mixable with a solvent of the positive electrode mixture slurry, and may be a solvent of the same type as the solvent of the positive electrode mixture slurry. An example of the aprotic polar solvent include N-methyl-2-pyrrolidone (NMP), methyl ethyl ketone, tetrahydrofuran, dimethylformamide, acetone, ethyl acetate, and dimethyl sulfoxide. Among these, NMP is preferably used.

### [Negative Electrode]

The negative electrode 12 has a negative electrode core 40 and a negative electrode mixture layer 41 provided on the negative electrode core 40. For the negative electrode core 40, a foil of a metal stable within a potential range of the negative electrode 12, such as copper, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. The negative electrode 12 may be produced by, for example, applying a negative electrode mixture slurry including the negative electrode active material, the binder, and the like on the surface of the negative electrode core 40, and drying and subsequently compressing the coating film to form the negative electrode mixture layer 41 on both the surfaces of the negative electrode core 40.

For the negative electrode active material, a carbon material that reversibly occludes and releases lithium ions is typically used. An example of the preferable carbon material is graphite such as natural graphite such as flake graphite, massive graphite, and amorphous graphite, and artificial graphite such as massive artificial graphite (MAG) and graphitized mesophase carbon microbead (MCMB). For the negative electrode active material, an element that forms an alloy with Li, such as Si and Sn, a material containing the element, and the like may be used. Among these, a composite material containing Si is preferable. An example of the preferable composite material containing Si includes a Si-containing material in which fine Si phases are dispersed in a SiO₂ phase, a silicate phase such as lithium silicate, a carbon phase, or a silicide phase. As the negative electrode active material, graphite and the Si-containing material may be used in combination.

For the binder included in the negative electrode mixture layer 41, a fluororesin, PAN, a polyimide, an acrylic resin, a polyolefin, and the like may be used as in the case of the positive electrode 11, but styrene-butadiene rubber (SBR) is preferably used. The negative electrode mixture layer 41 preferably further includes CMC or a salt thereof, polyacrylic acid (PAA) or a salt thereof, polyvinyl alcohol (PVA), and the like. Among these, SBR; and CMC or a salt thereof or PAA or a salt thereof are preferably used in combination. The negative electrode mixture layer 41 may include a conductive auxiliary such as CNT.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On an interface between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

### EXAMPLES

Hereinafter, the present disclosure will be further described with Examples, but the present disclosure is not limited to these Examples.

### <Example 1>

### [Synthesis of Lithium-Transition Metal Composite Oxide]

A composite hydroxide containing Ni, Co, and Mn was synthesized by a coprecipitation method, and subjected to a thermal treatment at 400°C to obtain a composite oxide. This oxide, lithium hydroxide, and calcium hydroxide as a raw material of a metal element M1, and niobium pentoxide and titanium oxide as raw materials of a metal element M2 were mixed so that a mole ratio (a Li/Me ratio) between the metal elements (Me) in the composite oxide and Li in lithium hydroxide was 1:1.040.

This mixture was fed into a calcining furnace, and subjected to a three-stage calcining. In the calcining step, the temperature was raised under an oxygen flow with an oxygen concentration of 95% (a flow rate of 2 mL/min per 10 cM2 and 5 L/min per kilogram of the mixture) at a temperature-raising rate of 2°C/min from room temperature to 500°C. Thereafter, the mixture was calcined at a temperature-raising rate of 1.5°C/min from 500°C to 680°C, and at a temperature-raising rate of 1°C/min from 680°C to 750°C, and then the temperature was held at 750°C for 3 hours. This calcined product was crushed, then washed with water, and then dried in vacuo at 170°C to obtain a lithium-transition metal composite oxide.

The obtained lithium-transition metal composite oxide was analyzed by ICP-AES, and as a result, relative to a total amount of the metal elements excluding Li, a content rate of Ni was 89.9 mol%, a content rate of Co was 3.0 mol%, a content rate of Mn was 6.0 mol%, a content rate of Ca was 0.4 mol%, a content rate of Nb was 0.2 mol%, and a content rate of Ti was 0.5 mol%. A volume-based D50 of the composite oxide measured by using MT3000II, manufactured by MicrotracBEL Corp., with water as a dispersion medium was 12 µm. It was confirmed from an SEM image that the composite oxide was of secondary particles each formed by aggregation of primary particles, and it was confirmed by TEM-EDX that Ca, Nb, and Ti were present on surfaces of the primary particles.

### [Preparation of AB Dispersion Liquid]

Acetylene black (AB-1) having an average particle diameter (an average long diameter) of 19 nm and an average aspect ratio of 1.7 times was used as a conductive auxiliary, and polyvinylpyrrolidone (PVP) was used as a dispersant. The conductive auxiliary and the dispersant were dry-blended at a mass ratio of 10: 1 to prepare a powder, the powder was added to N-methyl-2-pyrrolidone (NMP) and dispersed by using a ball mill to obtain a conductive auxiliary dispersion liquid (an AB-1 dispersion liquid) containing the conductive auxiliary at about 10 mass%.

### [Production of Positive Electrode]

The above lithium-transition metal composite oxide was used as a positive electrode active material. This positive electrode active material, the AB dispersion liquid (the AB-1 dispersion liquid), and polyvinylidene fluoride (PVDF) were mixed at a solid-content mass ratio of 100:1:1 excluding the dispersant, and N-methyl-2-pyrrolidone (NMP) was used as a dispersion medium to prepare a positive electrode mixture slurry. This positive electrode mixture slurry was applied on both surfaces of a positive electrode core composed of aluminum foil, the coating film was dried and then rolled by using a roller, and cut to a predetermined electrode size to produce a positive electrode in which a positive electrode mixture layer was formed on both the surfaces of the positive electrode core. At a part of the positive electrode, an exposed portion where the surface of the positive electrode core was exposed was provided.

### [Production of Negative Electrode]

As a negative electrode active material, natural graphite and a silicon compound were used. The natural graphite, the silicon compound, sodium carboxymethylcellulose (CMC-Na), and a dispersion of styrene-butadiene rubber (SBR) were mixed at a solid-content mass ratio of 95:5:1:1, and water was used as a dispersion medium to prepare a negative electrode mixture slurry. This negative electrode mixture slurry was applied on both surfaces of a negative electrode core composed of copper foil, the coating film was dried, then the coating film was rolled by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

### [Preparation of Non-Aqueous Electrolyte Liquid]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Production of Test Cell (Non-Aqueous Electrolyte Secondary Battery)]

An aluminum lead was attached to the exposed portion of the positive electrode, and a nickel lead was attached to the exposed portion of the negative electrode. The positive electrode and the negative electrode were spirally wound via a separator made of a polyolefin to produce a wound electrode assembly. This electrode assembly was housed in a bottomed cylindrical exterior housing can, the non-aqueous electrolyte liquid was injected thereinto, and then an opening portion of the exterior housing can was sealed with a sealing assembly to obtain a test cell.

### <Example 2>

A test cell was produced in the same manner as in Example 1 except that MWCNT (CNT-1) having an average fiber diameter of 12 nm, an average fiber length of 1 µm, an average aspect ratio of 83 times, and a BET specific surface area of 220 m²/g was used as the conductive auxiliary in the positive electrode instead of AB-1, and the solid-content addition amount of CNT-1 was 0.5 parts by mass relative to 100 parts by mass of the positive electrode active material. A method for preparing the MWCNT dispersion liquid was as follows.

### [Preparation of MWCNT Dispersion Liquid]

As noted above, CNT-1 as the conductive auxiliary, hydrogenated nitrile rubber (H-NBR) in which a copolymer of acrylonitrile and butadiene was hydrogen-substituted as a dispersant, and polyvinylpyrrolidone (PVP) also as the dispersant were mixed at a mass ratio of 6:1:1, the mixture was added to N-methyl-2-pyrrolidone (NMP), and the mixture was kneaded by using a ball mill to obtain a conductive auxiliary dispersion liquid (a CNT-1 dispersion liquid) containing the conductive auxiliary at about 3 mass%.

### <Example 3>

A test cell was produced in the same manner as in Example 2 except that a CNT-2 dispersion liquid was used as the conductive auxiliary for the positive electrode instead of the CNT-1 dispersion liquid. A method for preparing the CNT-2 dispersion liquid was as follows.

### [Preparation of MWCNT Dispersion Liquid]

CNT-1 as the conductive auxiliary and polyvinylpyrrolidone (PVP) as the dispersant were mixed at a mass ratio of 3:1, the mixture was added to N-methyl-2-pyrrolidone (NMP), and the mixture was kneaded by using a ball mill to obtain a conductive auxiliary dispersion liquid (the CNT-2 dispersion liquid) containing the conductive auxiliary at about 3 mass%.

### <Example 4>

A composite hydroxide containing Ni, Co, Mn, and Al was synthesized by a coprecipitation method, and subjected to a thermal treatment at 400°C to obtain a composite oxide. Calcium hydroxide and strontium hydroxide were used as raw materials of a metal element M1, and zirconium oxide was used as a raw material of a metal element M2. A test cell was produced in the same manner as in Example 1 except for the above points. The obtained lithium-transition metal composite oxide was analyzed by ICP-AES, and as a result, relative to a total amount of the metal elements excluding Li, a content rate of Ni was 90.3 mol%, a content rate of Co was 3.0 mol%, a content rate of Mn was 5.0 mol%, a content rate of Al was 1.0 mol%, a content rate of Ca was 0.2 mol%, a content rate of Sr was 0.1 mol%, and a content rate of Zr was 0.4 mol%.

### <Example 5>

A test cell was produced in the same manner as in Example 4 except that a CNT-3 dispersion liquid was used as the conductive auxiliary. A method for preparing the MWCNT-3 dispersion liquid was as follows.

### [Preparation of MWCNT Dispersion Liquid]

MWCNT (CNT-2) having an average fiber diameter of 9 nm, an average fiber length of 1 µm, an average aspect ratio of 111 times, and a BET specific surface area of 260 m²/g as a conductive auxiliary, and polyvinylpyrrolidone (PVP) as a dispersant were mixed at a mass ratio of 3:1, the mixture was added to N-methyl-2-pyrrolidone (NMP), and the mixture was kneaded by using a ball mill to obtain a conductive auxiliary dispersion liquid (the CNT-3 dispersion liquid) containing the conductive auxiliary at about 3 mass%.

### <Example 6>

A test cell was produced in the same manner as in Example 3 except that the material produced in Example 4 was used as the positive electrode active material.

### <Example 7>

A composite hydroxide containing Ni and Mn was synthesized by a coprecipitation method, and subjected to a thermal treatment at 400°C to obtain a composite oxide. Calcium hydroxide was used as a raw material of a metal element M1, and niobium pentoxide and zirconium oxide were used as raw materials of a metal element M2. A test cell was produced in the same manner as in Example 1 except for the above points. The obtained lithium-transition metal composite oxide was analyzed by ICP-AES, and as a result, relative to a total amount of the metal elements excluding Li, a content rate of Ni was 90.1 mol%, a content rate of Mn was 9.0 mol%, a content rate of Ca was 0.3 mol%, a content rate of Nb was 0.4 mol%, and a content rate of Zr was 0.2 mol%.

### <Comparative Example 1>

A test cell was produced in the same manner as in Example 1 except that, in the synthesis of the lithium-transition metal composite oxide, the raw material of the metal element M1 and the raw material of the metal element M2 were not added, and an AB-0 dispersion liquid was used as the conductive auxiliary for the positive electrode instead of the AB-1 dispersion liquid. A method for preparing the AB-0 dispersion liquid was as follows.

### [Preparation of AB Dispersion Liquid]

Acetylene black (AB-0) having an average particle diameter (an average long diameter) of 23 nm and an average aspect ratio of 1.5 times was used as a conductive auxiliary, and polyvinylpyrrolidone (PVP) was used as a dispersant. The conductive auxiliary and the dispersant were dry-blended at a mass ratio of 10: 1 to prepare a powder, the powder was added to N-methyl-2-pyrrolidone (NMP) and dispersed by using a ball mill to obtain a conductive auxiliary dispersion liquid (the AB-0 dispersion liquid) containing the conductive auxiliary at about 10 mass%.

### <Comparative Example 2>

A test cell was produced in the same manner as in Example 1 except that, in the synthesis of the lithium-transition metal composite oxide, the raw material of the metal element M1 and the raw material of the metal element M2 were not added.

### <Comparative Example 3>

A test cell was produced in the same manner as in Comparative Example 1 except that, in the synthesis of the lithium-transition metal composite oxide, calcium hydroxide was added as the raw material of the metal element M1 so that a content rate of Ca was 0.3 mol%.

### <Comparative Example 4>

A test cell was produced in the same manner as in Comparative Example 3 except that a composite hydroxide containing Ni, Co, Mn, and Al was synthesized by a coprecipitation method and subjected to a thermal treatment at 400°C to obtain a composite oxide, and in the synthesis of the lithium-transition metal composite oxide, zirconium oxide was added as the raw material of the metal element M2 so that a content rate of Zr was 0.4 mol%.

### <Comparative Example 5>

A test cell was produced in the same manner as in Comparative Example 1 except that a composite hydroxide containing Ni and Mn was synthesized by a coprecipitation method and subjected to a thermal treatment at 400°C to obtain a composite oxide. The obtained lithium-transition metal composite oxide was analyzed by ICP-AES, and as a result, relative to a total amount of the metal elements excluding Li, a content rate of Ni was 91.0 mol%, and a content rate of Mn was 9.0 mol%.

### <Comparative Example 6>

A test cell was produced in the same manner as in Comparative Example 5 except that, in the synthesis of the lithium-transition metal composite oxide, calcium hydroxide was added as the raw material of the metal element M1 so that a content rate of Ca was 0.3 mol%, and niobium pentoxide and zirconium oxide were added as the raw materials of the metal element M2 so that a content rate of Nb was 0.4 mol% and a content rate of Zr was 0.2 mol%.

The capacity, the reaction resistance, and the direct-current resistance of each of the test cells of Examples and Comparative Examples were measured. Table 1 shows the evaluation results. The evaluation results (the reaction resistance and the direct-current resistance) shown in Table 1 are values relative to the values of the test cell of Comparative Example 1 being 100.

### [Measurement of Capacity]

Under a temperature environment at 25°C, an operation A in which the test cell was charged at a constant current of 0.2 It until a cell voltage reached 4.2 V and then charged at a constant voltage of 4.2 V until a current value reached 1/50 It; and an operation B in which the test cell was discharged at a constant current of 0.2 It until the cell voltage reached 2.5 V were repeated twice, and the capacity was determined.

### [Evaluation of Reaction Resistance (Rct)]

Under a temperature environment at 25°C, the test cell of which the capacity was determined was charged at a constant current of 0.2 It until the cell voltage reached 4.2 V, and charged at a constant voltage of 4.2 V until the current value reached 1/50 It. Thereafter, under a condition of a temperature of 25°C, a frequency of greater than or equal to 0.01 Hz and less than or equal to 100000 Hz, and an applying voltage of 10 mV, the alternating-current impedance of the test cell was measured, and the reaction resistance Rct at 25°C was determined by equivalent circuit fitting with Nyquist plot.

### [Evaluation of Direct-Current Resistance (DCR)]

Under a temperature environment at 25°C, the test cell of which the capacity was determined was charged at a constant current of 0.2 It until the cell voltage reached 4.2 V, charged at a constant voltage of 4.2 V until the current value reached 1/50 It, and discharged at a constant current of 0.2 It until a capacity corresponded to 50% of the capacity (SOC 50%). A constant current of 0.5 It was sent through this test cell for 10 seconds. A potential difference caused in this time was divided by the current value to determine the direct-current resistance DCR.

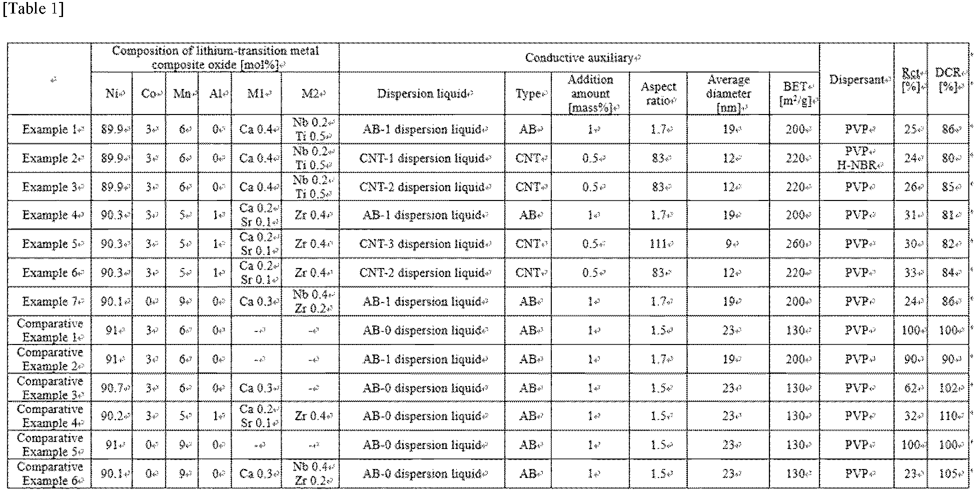

As shown in Table 1, all of the test cells of Examples exhibited low reaction resistance and direct-current resistance compared with the test cells of Comparative Examples, and it is understood that the positive electrode active materials of Examples have an excellent effect of lowering the resistance. As obvious from Comparative Examples 1 to 3 and 5, the case where the metal elements M1 and M2 are not added to the lithium-transition metal composite oxide cannot yield the sufficient effect of lowering the resistance. Even when the metal elements M1 and M2 are added to the lithium-transition metal composite oxide, the case where the average particle diameter of the conductive auxiliary is greater than 20 nm may lower the reaction resistance to be the same level as in Examples, but the direct-current resistance rather more rises than the case of Comparative Example 1 (Comparative Examples 4 and 6).

That is, both the reaction resistance and the direct-current resistance are specifically lowered only when the metal elements M1 and M2 are introduced onto the interface between the primary particles constituting the positive electrode active material and the conductive auxiliary having an average particle diameter or an average fiber diameter of less than or equal to 20 nm is used. When CNT having an average fiber diameter of less than or equal to 20 nm was used as conductive auxiliary, the CNT added at a smaller amount than AB yielded the excellent effect of lowering the resistance.

The present disclosure will be further described with the following embodiments.

Constitution 1: A positive electrode for a non-aqueous electrolyte secondary battery, the positive electrode comprising: a positive electrode core; and a positive electrode mixture layer formed on the positive electrode core, wherein the positive electrode mixture layer includes a positive electrode active material, a conductive auxiliary, and a binder, the positive electrode active material includes a lithium-transition metal composite oxide having a layered structure and containing greater than or equal to 75 mol% of Ni relative to a total molar amount of metal elements excluding Li, the lithium-transition metal composite oxide is of secondary particles each formed by aggregation of primary particles, on an interface between the primary particles inside the secondary particles, at least one selected from the group consisting of Ca and Sr and at least one selected from the group consisting of W, Mo, Ti, Si, Nb, and Zr are present, and the conductive auxiliary contains carbon, and includes at least one selected from the group consisting of a particulate carbon material having an average particle diameter of less than or equal to 20 nm and a fibrous carbon material having an average fiber diameter of less than or equal to 20 nm.

Constitution 2: The positive electrode for a non-aqueous electrolyte secondary battery according to Constitution 1, wherein the lithium-transition metal composite oxide is a composite oxide represented by a general formula LiₓNiₐCo_{b}Mn_{c}Al_{d}M1ₑM2_{f}O_{2-y}, wherein 0.95 < x < 1.05, 0.75 ≤ a ≤ 0.95, 0 ≤ b ≤ 0.15, 0 ≤ c ≤ 0.25, 0 ≤ d ≤ 0.03, 0 < e ≤ 0.01, 0 < f ≤ 0.03, 0 ≤ y < 0.05, a+b+c+d+e+f = 1, M1 is at least one element selected from the group consisting of Ca and Sr, and M2 is at least one element selected from the group consisting of W, Mo, Ti, Si, Nb, and Zr.

Constitution 3: The positive electrode for a non-aqueous electrolyte secondary battery according to Constitution 1 or 2, wherein, on the interface between the primary particles inside the secondary particles, a compound represented by a general formula M1_{α}M2_{β}O_{γ} is adhered, wherein 1 ≤ α ≤ 2, 1 ≤ β ≤ 5, 4 ≤ γ ≤ 9, M1 is at least one element selected from the group consisting of Ca and Sr, and M2 is at least one element selected from the group consisting of W, Mo, Ti, Si, Nb, and Zr.

Constitution 4: The positive electrode for a non-aqueous electrolyte secondary battery according to any one of Constitutions 1 to 3, wherein the particulate carbon material is acetylene black having an average particle diameter of less than or equal to 20 nm.

Constitution 5: The positive electrode for a non-aqueous electrolyte secondary battery according to any one of Constitutions 1 to 4, wherein the fibrous carbon material is carbon nanotube having an average fiber diameter of less than or equal to 10 nm.

Constitution 6: The positive electrode for a non-aqueous electrolyte secondary battery according to any one of Constitutions 1 to 5, wherein the fibrous carbon material has an average aspect ratio of greater than or equal to 50.

Constitution 7: The positive electrode for a non-aqueous electrolyte secondary battery according to any one of Constitutions 1 to 6, wherein a content of the conductive auxiliary is less than or equal to 1 part by mass relative to 100 parts by mass of the lithium-transition metal composite oxide.

Constitution 8: The positive electrode for a non-aqueous electrolyte secondary battery according to any one of Constitutions 1 to 7, including a nitrile-group-containing rubber as a dispersant for the conductive auxiliary.

Constitution 9: A non-aqueous electrolyte secondary battery, comprising: the positive electrode according to any one of Constitutions 1 to 8; a negative electrode; and a non-aqueous electrolyte.

### REFERENCE SIGNS LIST

10 Secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A positive electrode for a non-aqueous electrolyte secondary battery, the positive electrode comprising:
a positive electrode core; and
a positive electrode mixture layer formed on the positive electrode core, wherein
the positive electrode mixture layer includes a positive electrode active material, a conductive auxiliary, and a binder,
the positive electrode active material includes a lithium-transition metal composite oxide having a layered structure and containing greater than or equal to 75 mol% of Ni relative to a total molar amount of metal elements excluding Li,
the lithium-transition metal composite oxide is of secondary particles each formed by aggregation of primary particles,
on an interface between the primary particles inside the secondary particles, at least one selected from the group consisting of Ca and Sr and at least one selected from the group consisting of W, Mo, Ti, Si, Nb, and Zr are present, and
the conductive auxiliary contains carbon, and includes at least one selected from the group consisting of a particulate carbon material having an average particle diameter of less than or equal to 20 nm and a fibrous carbon material having an average fiber diameter of less than or equal to 20 nm.

2. The positive electrode for a non-aqueous electrolyte secondary battery according to claim 1, wherein the lithium-transition metal composite oxide is a composite oxide represented by a general formula LiₓNiₐCo_{b}Mn_{c}AlₐM1ₑM2_{f}O_{2-y}, wherein 0.95 < x < 1.05, 0.75 ≤ a ≤ 0.95, 0 ≤ b ≤ 0.15, 0 ≤ c ≤ 0.25, 0 ≤ d ≤ 0.03, 0 < e ≤ 0.01, 0 < f ≤ 0.03, 0 ≤ y < 0.05, a+b+c+d+e+f = 1, M1 is at least one element selected from the group consisting of Ca and Sr, and M2 is at least one element selected from the group consisting of W, Mo, Ti, Si, Nb, and Zr.

3. The positive electrode for a non-aqueous electrolyte secondary battery according to claim 1, wherein, on the interface between the primary particles inside the secondary particles, a compound represented by a general formula M1_{α}M2_{β}O_{γ} is adhered, wherein 1 ≤ α ≤ 2, 1 ≤ β ≤ 5, 4 ≤ y ≤ 9, M1 is at least one element selected from the group consisting of Ca and Sr, and M2 is at least one element selected from the group consisting of W, Mo, Ti, Si, Nb, and Zr.

4. The positive electrode for a non-aqueous electrolyte secondary battery according to claim 1, wherein the particulate carbon material is acetylene black having an average particle diameter of less than or equal to 20 nm.

5. The positive electrode for a non-aqueous electrolyte secondary battery according to claim 1, wherein the fibrous carbon material is carbon nanotube having an average fiber diameter of less than or equal to 10 nm.

6. The positive electrode for a non-aqueous electrolyte secondary battery according to claim 1, wherein the fibrous carbon material has an average aspect ratio of greater than or equal to 50.

7. The positive electrode for a non-aqueous electrolyte secondary battery according to claim 1, wherein a content of the conductive auxiliary is less than or equal to 1 part by mass relative to 100 parts by mass of the positive electrode active material.

8. The positive electrode for a non-aqueous electrolyte secondary battery according to claim 1, including a nitrile-group-containing rubber as a dispersant for the conductive auxiliary.

9. A non-aqueous electrolyte secondary battery, comprising:
the positive electrode according to any one of claims 1 to 8;
a negative electrode; and
a non-aqueous electrolyte.
